(19) Europäisches Patentamt
European Patent Office
Office européen des brevets

(11) EP 0 616 441 B1

(12) **FASCICULE DE BREVET EUROPEEN**

(45) Date de publication et mention
de la délivrance du brevet:
**30.06.1999 Bulletin 1999/26**

(51) Int Cl.$^6$: **H04B 10/16**

(21) Numéro de dépôt: **94400565.1**

(22) Date de dépôt: **15.03.1994**

(54) **Système pour rétablir la qualité de transmission d'une liaison incluant des équipements amplificateurs, en cas de défaillance d'un ou de plusieurs de ces équipements amplificateurs**

Vorrichtung zur Wiederherstellung der Übertragungsgüte einer Verbindung mit Verstärkern beim Ausfall eines der mehrerer Verstärker

System for reestablishing the quality of transmission of a link including amplifiers in case of failure of one or several of these amplifiers

(84) Etats contractants désignés:
**DE ES GB IT**

(30) Priorité: **16.03.1993 FR 9303015**

(43) Date de publication de la demande:
**21.09.1994 Bulletin 1994/38**

(73) Titulaire: **ALCATEL**
**75008 Paris (FR)**

(72) Inventeurs:
- **Pamart, Jean-Luc**
  **F-22450 La Roche Derrien (FR)**
- **Ollivier, Francois-Xavier**
  **F-22300 Lannion (FR)**
- **Morin, Stéphane**
  **F-22300 Lannion (FR)**
- **Uhel, Roland**
  **F-29121 Clohars Carnoet (FR)**

(74) Mandataire: **Sciaux, Edmond et al**
**COMPAGNIE FINANCIERE ALCATEL**
**Dépt. Propr. Industrielle,**
**30, avenue Kléber**
**75116 Paris (FR)**

(56) Documents cités:
**GB-A- 2 206 461          US-A- 4 727 601**

- **NEC RESEARCH AND DEVELOPMENT., no.66, Juillet 1982, TOKYO JP pages 16 - 24 T.IWAKAMI ET AL 'Optical Data Highway Using Error - Free Bypassing Technique'**
- **PATENT ABSTRACTS OF JAPAN vol. 9, no. 49 (E-300) 2 Mars 1985 & JP-A-59 190 735 (NIPPON DENKI)**
- **PATENT ABSTRACTS OF JAPAN vol. 14, no. 411 (E-0973) 5 Septembre 1990 & JP-A-02 155 323 (NEC)**

## Description

La présente invention a trait, d'une manière générale, à la fiabilité des liaisons de transmission d'informations, et concerne plus particulièrement un système permettant de rétablir la qualité de transmission d'une liaison incluant des équipements amplificateurs, en cas de défaillance d'un ou de plusieurs de ces équipements amplificateurs.

De tels équipements amplificateurs peuvent être constitués par des équipements amplificateurs dits intermédiaires appelés aussi répéteurs, disposés à intervalles réguliers sur une liaison en vue de compenser l'atténuation subie par les signaux porteurs desdites informations, du fait même de leur transmission sur cette liaison, ou par des équipements amplificateurs prévus à l'une et/ou à l'autre des extrémités de cette liaison en vue d'assurer un niveau d'émission et/ou de réception suffisant.

Il est connu, pour rétablir la qualité de transmission d'une liaison, en cas de défaillance d'un des équipements qui la constituent, de procéder au remplacement automatique de l'élément défectueux de cet équipement, responsable de sa défaillance, par un autre élément non défectueux, dans le cadre d'une mise en redondance de tels éléments, dans lesdits équipements.

Une telle solution est utilisée notamment dans le cas de liaisons immergées, car elle évite d'avoir à intervenir sur lesdits équipements, mais elle a pour inconvénient, du fait de cette mise en redondance, d'accroître le coût et l'encombrement de ces équipements.

La présente invention a pour objet un système pour rétablir la qualité de transmission d'une liaison de transmission d'informations numériques incluant des équipements amplificateurs, en cas de défaillance d'un ou de plusieurs de ces équipements, applicable notamment au cas de liaisons immergées, notamment optiques, et permettant notamment d'éviter cet inconvénient.

La présente invention a pour objet un système pour rétablir la qualité de transmission d'une liaison de transmission d'informations numériques incluant des équipements amplificateurs, en cas de défaillance d'un ou de plusieurs de ces équipements amplificateurs, essentiellement caractérisé en ce qu'il comporte:

- associés à au moins un desdits équipements amplificateurs, des moyens pour commander le gain de cet équipement amplificateur, en vue de compenser une dégradation du rapport signal-sur-bruit de réception, consécutive à une défaillance d'au moins un autre équipement amplificateur,

- à l'extrémité-émission de ladite liaison, des moyens de codage correcteur d'erreurs opérant sur les informations numériques à transmettre, et à l'extrémité-réception de ladite liaison, des moyens de décodage correcteur d'erreurs opérant sur les informations numériques reçues, le code correcteur d'erreurs utilisé par lesdits moyens de codage correcteur d'erreurs et par lesdits moyens de décodage correcteur d'erreurs permettant de réduire, voire supprimer, le taux d'erreurs résiduel en réception, lié à la dégradation résiduelle du rapport signal-sur-bruit de réception, non compensée par ladite commande de gain.

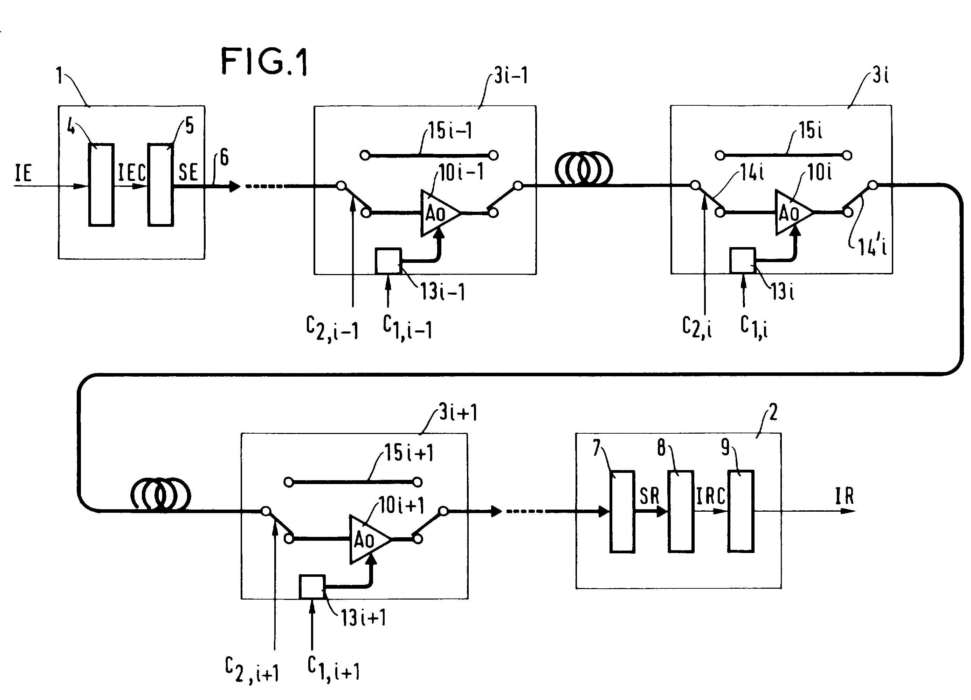

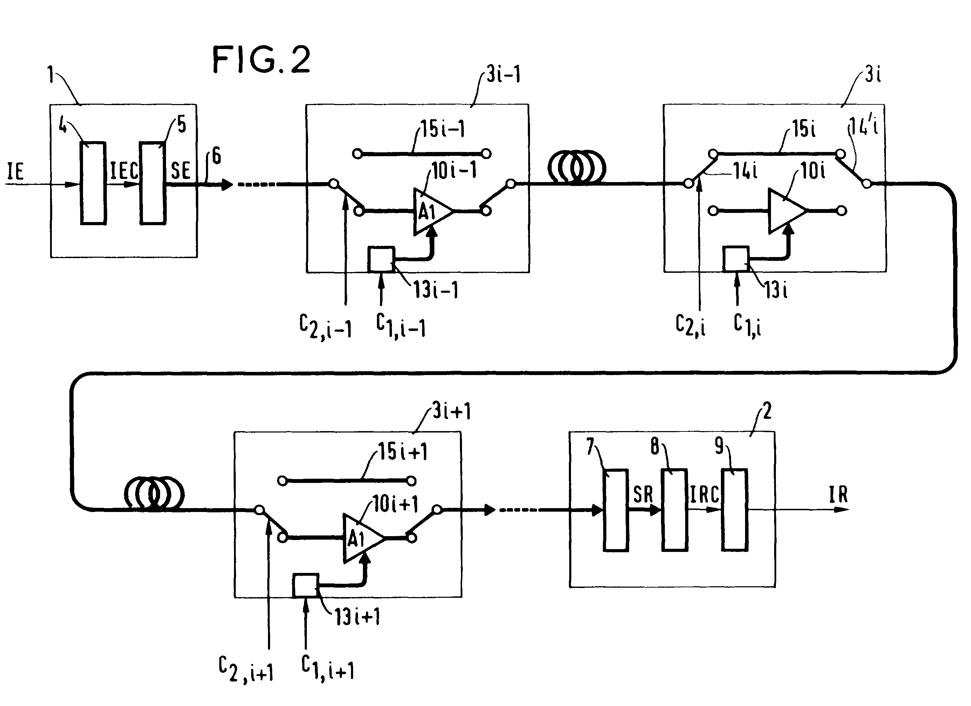

D'autres objets et caractéristiques de la présente invention apparaîtront à la lecture de la description suivante d'un exemple de réalisation, donné à titre d'exemple pour le cas d'une liaison optique, ladite description étant faite en relation avec les dessins ci-annexés dans lesquels: les figures 1 et 2 sont des schémas illustrant une liaison de transmission munie d'un système suivant la présente invention, la figure 1 illustrant cette liaison en l'absence de défaillance d'équipement amplificateur, et la figure 2 en cas de défaillance de l'un desdits équipements amplificateurs.

La liaison de transmission illustrée sur les figures 1 et 2 comporte un équipement d'extrémité-émission, noté 1, un équipement d'extrémité-réception, noté 2, et un ensemble d'équipements intermédiaires, ou répéteurs, dont à titre d'exemple, trois, notés $3_{i-1}$, $3_i$ et $3_{i+1}$, ont été représentés sur ces figures.

Chaque équipement intermédiaire tel que $3_i$ comporte un équipement amplificateur, en l'occurrence optique, noté $10_i$. Bien que non illustré spécifiquement, l'un et/ou l'autre des équipements d'extrémité pourraient également comporter de tels équipements amplificateurs.

L'équipement d'extrémité-émission 1 comporte des moyens de codage correcteur d'erreurs, référencés 4, qui reçoivent les informations numériques à transmettre, notées IE.

Ces moyens de codage correcteur d'erreurs peuvent mettre en oeuvre un code correcteur d'erreurs tel que par exemple un code linéaire en blocs comme ceux dits B.C.H (Bose Chaudhuri-Hocquenghem) ou encore Reed-Solomon, ou bien un code convolutionnel, ou bien encore mettre en oeuvre une concaténation de plusieurs de ces codes, identiques ou différents, dont on pourra trouver des descriptions dans la littérature.

L'équipement d'extrémité-émission 1 comporte en outre, dans l'exemple considéré ici d'une liaison optique, un émetteur optique 5, qui reçoit les informations IEC issues des moyens de codage correcteur d'erreurs et qui fournit un signal optique SE transmis sur une fibre optique, référencée 6. L'émetteur optique 5 comporte notamment un transducteur électro-optique ainsi qu'éventuellement des moyens pour mettre les informations numériques à transmettre et issues en l'occurrence des moyens de codage correcteur d'erreurs, sous une forme adaptée à leur transmission sur une liaison optique.

L'équipement d'extrémité-réception 2 comporte un filtre optique, 7, destiné à rejeter le bruit optique engendré par les équipements amplificateurs optiques, de façon à augmenter le rapport signal-sur-bruit.

Le signal optique SR issu de ce filtre optique est appliqué à un récepteur optique, 8, qui délivre des informations numériques IRC, lesquelles sont appliquées à des moyens de décodage correcteur d'erreurs 9 opérant suivant le code choisi pour les moyens de codage correcteur d'erreurs 4.

Le récepteur optique 8 comporte notamment un transducteur optoélectronique, des moyens de décision, ainsi qu'éventuellement des moyens permettant de repasser de la forme des informations numériques adaptée à leur transmission sur la liaison optique à la forme initiale.

Dans l'exemple considéré ici d'une liaison optique, lesdits équipements amplificateurs optiques peuvent être par exemple des amplificateurs optiques à fibre dopée ou bien des amplificateurs optiques à semi-conducteur. Dans le cas par exemple d'amplificateurs optiques à fibre dopée, un équipement amplificateur comporte ainsi une portion de fibre dopée avec des ions de terre rare telle que l'Erbium par exemple, associée à une source optique dite de pompe fournissant à cette portion de fibre dopée un signal optique dit de pompe, lui permettant de réaliser une amplification optique, et de fixer le gain de cette amplification optique. Dans cet exemple, une défaillance d'un équipement amplificateur consiste notamment en une défaillance de cette source optique de pompe.

Chaque équipement intermédiaire tel que $3_i$ comporte, outre l'équipement amplificateur $10_i$, des moyens, $13_i$, de commande de gain de cet équipement amplificateur, en cas de défaillance d'au moins un autre équipement amplificateur de cette liaison, en vue de compenser la dégradation du rapport signal-sur-bruit de réception, consécutive à une telle défaillance.

Dans l'exemple d'équipements amplificateurs constitués par des amplificateurs optiques à fibre dopée, lesdits moyens de commande de gain pourront consister en des moyens pour modifier, de façon correspondante, le signal électrique de commande de la source optique de pompe.

Suivant l'invention, en cas de défaillance d'un équipement amplificateur, le gain d'au moins un autre amplificateur est donc commandé en vue de compenser la dégradation du rapport signal-sur-bruit de réception consécutive à une telle défaillance. Le nombre d'équipements amplificateurs dont on commande ainsi le gain, ainsi que leur emplacement sur la liaison par rapport à l'équipement défaillant, peuvent être laissés à l'appréciation de l'opérateur, et être déterminés expérimentalement par exemple, ou par simulation, étant entendu qu'il n'y a, pour chaque cas, pas de solution unique mais de multiples possibilités.

Dans l'exemple illustré sur la figure 2, et correspondant au cas d'une défaillance de l'équipement amplificateur $10_i$, le gain des équipements amplificateurs $10_{i-1}$ et $10_{i+1}$ est ainsi porté à une valeur, notée $A_1$, supérieure à celle, notée $A_o$ et correspondant au cas, illustré sur la figure 1, d'absence de défaillance d'équipement amplificateur.

Dans l'exemple de réalisation illustré sur les figures, chaque équipement intermédiaire tel que $3_i$ comporte en outre des moyens permettant éventuellement, notamment en cas de dégradation totale de l'équipement amplificateur $10_i$, la mise hors liaison de cet équipement amplificateur, et son remplacement en l'occurrence par une portion de fibre, notée $15_i$, ces moyens comportant en l'occurrence deux commutateurs optiques, notés respectivement $14_i$, $14'_i$. Dans l'exemple illustré sur la figure 2, les commutateurs $14_i$ et $14'_i$ sont ainsi commandés de façon à réaliser une mise hors liaison de l'équipement amplificateur $10_i$.

Le code correcteur d'erreurs utilisé sur la liaison permet de réduire, voire supprimer, le taux d'erreurs résiduel en réception, lié à la dégradation résiduelle du rapport signal-sur-bruit de réception, non compensée par ladite commande de gain, et d'ailleurs non complètement compensable par cette commande de gain, du fait que ladite liaison a alors un dimensionnement dégradé par rapport à celui, dit nominal, pour lequel elle a été conçue et qui permet de garantir, en réception, un taux d'erreurs inférieur ou égal au taux d'erreurs maximum spécifié par l'utilisateur.

On rappelle que ce dimensionnement nominal découle de la théorie de la transmission d'informations, montrant qu'il existe, pour une liaison munie d'équipements amplificateurs intermédiaires, et dans l'hypothèse d'équipements amplificateurs intermédiaires identiques, équidistants, et compensant chacun exactement l'affaiblissement apporté par le tronçon de ligne qui le précède, c'est-à-dire dans l'hypothèse de pas dits à gain unitaire (un pas étant défini comme étant constitué d'un équipement amplificateur intermédiaire et du tronçon de ligne qui le précède) une relation entre le rapport signal-sur-bruit en réception et certains paramètres caractéristiques de cette liaison, tels que par exemple le nombre de pas et la longueur des pas (une augmentation du nombre de pas, de même qu'une augmentation de la longueur des pas, intervenant par exemple, toutes choses égales par ailleurs, pour augmenter ce taux d'erreurs) : voir par exemple "Systèmes de Télécommunications-Bases de transmission" - P.G. FONTOLLIET-Collection Technique et Scientifique des Télécommunications-DUNOD.

Dans le cas considéré ici de défaillance d'équipement(s) amplificateur(s), lesdites hypothèses n'étant plus vérifiées, y compris une fois ladite commande de gain effectuée, la liaison n'est plus alors dimensionnée suivant ce dimensionnement nominal, mais suivant un dimensionnement dégradé par rapport à ce dimensionnement nominal, entraînant une dégradation du rapport signal-sur-bruit de réception, et donc une dégradation du taux d'erreurs en réception (avant décodage correcteur d'erreurs).

On rappelle en effet que la théorie de la transmission d'informations numériques montre que le taux d'erreurs en réception, à savoir le rapport entre le nombre de bits faux à l'issue de l'opération de décision effectuée en réception, pour permettre la reconstitution desdites informations, et le nombre total de bits reçus, est, du moins dans l'hypothèse de bruit à statistique gaussienne, lié au rapport signal-sur-bruit avant ladite opération de décision (voir par exemple l'ouvrage cité ci-dessus).

Le code correcteur d'erreurs utilisé dans le système suivant l'invention permet de faire en sorte que le taux d'erreurs finalement obtenu, c'est-à-dire après décodage correcteur d'erreurs, ne dépasse pas le taux d'erreurs maximum spécifié par l'utilisateur. Les paramètres caractéristiques de ce code correcteur d'erreurs, et notamment sa capacité de correction, devront donc être déterminés en conséquence, suivant les règles habituelles.

On rappelle que le taux d'erreurs, $\varepsilon'$, obtenu en sortie de moyens de décodage correcteur d'erreurs est lié au taux d'erreurs, $\varepsilon$, en entrée de ces moyens de décodage correcteur d'erreurs, par une relation du type :

$$\varepsilon' = \frac{1}{n} \sum_{i=t+1}^{n} (i+t)\, C_n^i\, \varepsilon^i\, (1-\varepsilon)^{n-i}$$

où "n" et "t" sont des paramètres définissant le code correcteur d'erreurs utilisé, "n" désignant la longueur du mot de code, et "t" désignant le nombre d'erreurs corrigibles par mot de code (voir par exemple "Codes correcteurs Théorie et Applications" A.Poli, L. Huguet, MASSON - Logique mathématiques informatique).

Les commandes de gain effectuées suivant l'invention, ainsi que les éventuelles commandes de mise hors liaison d'équipement(s) amplificateur(s), (notées, sur les figures, respectivement $C_{1,i}$ et $C_{2,i}$ pour l'équipement amplificateur $10_i$ par exemple) pourront par exemple provenir d'un équipement d'extrémité de ladite liaison, ce dernier recevant, pour l'élaboration desdites commandes, des informations provenant desdits équipements amplificateurs et permettant de détecter une dégradation de leur qualité de transmission, une telle détection pouvant par ailleurs être classique et ne constituant pas en elle-même l'objet de la présente invention.

## Revendications

1. Système pour rétablir la qualité de transmission d'une liaison de transmission d'informations numériques incluant des équipements amplificateurs, en cas de défaillance d'un ou de plusieurs de ces équipements amplificateurs, caractérisé en ce qu'il comporte:

   - associés à au moins un desdits équipements amplificateurs, ($10_i$), des moyens ($13_i$) pour commander le gain de cet équipement amplificateur, en vue de compenser une dégradation du rapport signal-sur-bruit de réception consécutive à une défaillance d'au moins un autre équipement amplificateur,
   - à l'extrémité-émission de ladite liaison, des moyens (4) de codage correcteur d'erreurs opérant sur les informations numériques à transmettre, et à l'extrémité-réception de ladite liaison, des moyens (9) de décodage correcteur d'erreurs opérant sur les informations numériques reçues, le code correcteur d'erreurs utilisé par lesdits moyens de codage correcteur d'erreurs et par lesdits moyens de décodage correcteur d'erreurs permettant de réduire, voire supprimer, le taux d'erreurs résiduel en réception, lié à la dégradation résiduelle du rapport signal-sur-bruit de réception, non compensée par ladite commande de gain.

2. Système selon la revendication 1, caractérisé en ce qu'il comporte en outre, associés à au moins un desdits équipements amplificateurs, des moyens ($14_i$, $14'_i$, $15_i$) de mise hors liaison de cet équipement amplificateur, en cas de défaillance de cet équipement amplificateur.

## Patentansprüche

1. System zum Wiederherstellen der Übertragungsqualität einer digitalen Informationsübertragungsverbindung, die Verstärkereinrichtungen umfasst, im Fall des Versagens einer oder mehrerer dieser Verstärkereinrichtungen, dadurch gekennzeichnet, dass es umfasst:

   - in Zuordnung zu wenigstens einer der Verstärkereinrichtungen ($10_i$) Mittel ($12_i$) zum Steuern der Verstärkung dieser Verstärkereinrichtung, um eine Beeinträchtigung des Empfangs-Signal-Rausch-Verhältnisses nach einem Versagen wenigstens einer anderen Verstärkereinrichtung zu kompensieren,
   - am Sende-Ende der Verbindung Fehlerkorrektur-Kodiermittel (4), die auf die zu sendenden digitalen Informationen wirken, und am Empfangs-Ende der Verbindung Fehlerkorrektur-Dekodiermittel (9), die auf die empfangenen digitalen Informationen wirken, wobei der von den Fehlerkorrektur-Kodiermitteln und den Fehlerkorrektur-Dekodiermitteln verwendete Fehlerkorrekturkode es erlaubt, die mit der restlichen Beeinträchtigung des Empfangs-Signal-Rausch-Verhältnisses verknüpfte, durch die Verstärkungssteuerung nicht kompensierte Restfehlerquote am Empfang zu verringern oder gar zu unterdrücken.

**2.** System nach Anspruch 1, dadurch gekennzeichnet, dass es ferner, wenigstens einer der Verstärkereinrichtungen zugeordnet, Mittel ($14_i$, $14'_i$, $15_i$) zum außer Verbindung Setzen dieser Verstärkereinrichtung im Falle des Versagens dieser Verstärkereinrichtung umfasst.

**Claims**

**1.** System for re-establishing the transmission quality of a digital information transmission link including amplifier equipments in the event of failure of one or more amplifier equipments, including:

- associated with at least one of said amplifier equipments ($10_i$), means ($13_i$) for varying the gain of said amplifier equipment in order to compensate for deterioration of the receive signal-to-noise ratio following failure of at least one other amplifier equipment,
- error corrector coding means (4) at the send end of said link operating on the digital information to be transmitted and error corrector decoding means (9) at the receive end of said link operating on the received digital information, the error corrector code used by said error corrector coding means and by said error corrector decoding means being adapted to reduce or even eliminate residual errors at the receive end associated with residual deterioration of the receive signal-to-noise ratio not compensated by varying the gain.

**2.** System according to claim 1 further including, associated with at least one of said amplifier equipments, means ($14_i$, $14'_i$, $15_i$) for disconnecting said amplifier equipment from said link in the event of failure of said amplifier equipment.

# FIG.1

EP 0 616 441 B1

# FIG.2

EP 0 616 441 B1